(19) Europäisches Patentamt / European Patent Office / Office européen des brevets

(11) **EP 2 720 293 B1**

(12) **EUROPEAN PATENT SPECIFICATION**

(45) Date of publication and mention of the grant of the patent:
**04.01.2017 Bulletin 2017/01**

(21) Application number: **12801139.2**

(22) Date of filing: **12.06.2012**

(51) Int Cl.:
*H01M 2/16* *(2006.01)*      *B01D 69/10* *(2006.01)*
*B01D 69/12* *(2006.01)*      *B29C 39/02* *(2006.01)*
*B29C 41/12* *(2006.01)*      *C08J 9/26* *(2006.01)*
*B01D 67/00* *(2006.01)*      *B01D 71/46* *(2006.01)*
*B29C 39/00* *(2006.01)*      *B29L 31/34* *(2006.01)*
*H01M 10/52* *(2006.01)*      *H01M 2/14* *(2006.01)*
*B29K 63/00* *(2006.01)*      *H01M 10/052* *(2010.01)*
*B29L 7/00* *(2006.01)*      *H01M 10/0587* *(2010.01)*

(86) International application number:
**PCT/JP2012/003836**

(87) International publication number:
**WO 2012/172788 (20.12.2012 Gazette 2012/51)**

(54) **EPOXY RESIN POROUS MEMBRANE, SEPARATOR FOR NONAQUEOUS ELECTROLYTE STORAGE DEVICE, NONAQUEOUS ELECTROLYTE STORAGE DEVICE, COMPOSITE SEMIPERMEABLE MEMBRANE, AND PROCESS FOR PRODUCING THE SAME**

PORÖSE EPOXIDHARZMEMBRAN, SEPARATOR FÜR SPEICHERVORRICHTUNG MIT WASSERFREIEM ELEKTROLYT, SPEICHERVORRICHTUNG MIT WASSERFREIEM ELEKTROLYT, SEMIPERMEABLE VERBUNDMEMBRAN UND HERSTELLUNGSVERFAHREN DAFÜR

MEMBRANE POREUSE EN RÉSINE ÉPOXYDE, SÉPARATEUR POUR DISPOSITIF DE STOCKAGE À ÉLECTROLYTE NON AQUEUX, DISPOSITIF DE STOCKAGE À ÉLECTROLYTE NON AQUEUX, MEMBRANE SEMI-PERMÉABLE COMPOSITE ET PROCÉDÉ POUR LES PRODUIRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **13.06.2011  JP 2011131520**
**29.05.2012  JP 2012122346**

(43) Date of publication of application:
**16.04.2014 Bulletin 2014/16**

(73) Proprietor: **Nitto Denko Corporation Osaka 567-8680 (JP)**

(72) Inventors:
• **SAITO, Yuko**
  **Osaka 567-8680 (JP)**
• **YANO, Chiharu**
  **Osaka 567-8680 (JP)**
• **TAKE, Hiroyoshi**
  **Osaka 567-8680 (JP)**
• **YAMADA, Yosuke**
  **Osaka 567-8680 (JP)**
• **SAKAMOTO, Michie**
  **Osaka 567-8680 (JP)**
• **NOUMI, Shunsuke**
  **Osaka 567-8680 (JP)**
• **YANO, Masaya**
  **Osaka 567-8680 (JP)**

(74) Representative: **Hart-Davis, Jason et al Cabinet Beau de Loménie 158, rue de l'Université 75340 Paris Cedex 07 (FR)**

(56) References cited:
WO-A1-2011/046145      JP-A- 2007 138 064
JP-A- 2010 077 358      JP-A- 2010 099 654
JP-A- 2010 121 122      US-A1- 2002 015 893

EP 2 720 293 B1

- DATABASE WPI Week 200678 Thomson Scientific, London, GB; AN 2006-758784 XP002734253, -& JP 2006 179280 A (NITTO DENKO CORP) 6 July 2006 (2006-07-06)

**Description**

TECHNICAL FIELD

The present invention relates to a porous epoxy resin membrane, a separator for nonaqueous electrolyte electricity storage devices, a nonaqueous electrolyte electricity storage device, a composite semipermeable membrane, and methods for producing them.

BACKGROUND ART

The demand for nonaqueous electrolyte electricity storage devices, as typified by lithium-ion secondary batteries, lithium-ion capacitors etc., is increasing year by year against a background of various problems such as global environment conservation and depletion of fossil fuel. Porous polyolefin membranes are conventionally used as separators for nonaqueous electrolyte electricity storage devices. A porous polyolefin membrane can be produced by the method described below.

First, a solvent and a polyolefin resin are mixed and heated to prepare a polyolefin solution. The polyolefin solution is formed into a sheet shape by means of a metal mold such as a T-die, and the resultant product is discharged and cooled to obtain a sheet-shaped formed body The sheet-shaped formed body is stretched, and the solvent is removed from the formed body. A porous polyolefin membrane is thus obtained. In the step of removing the solvent from the formed body, an organic solvent is used (see Patent Literature 1).

In the above production method, a halogenated organic compound such as dichloromethane is often used as the organic solvent. The use of a halogenated organic compound places a very large load on the environment, and thus has become a problem.

By contrast, with a method described in Patent Literature 2 (a so-called dry method), a porous polyolefin membrane can be produced without use of a solvent that places a large load on the environment. However, this method has a problem in that control of the pore diameter of the porous membrane is difficult. In addition, there is also a problem in that when a porous membrane produced by this method is used as a separator, imbalance of ion permeation is likely to occur inside an electricity storage device.

Furthermore, in view of the long-term reliability of an electricity storage device, it is desired that a porous membrane used as a separator should have high chemical stability.

CITATION LIST

Patent Literature

Patent Literature 1: JP2001-192487 A
Patent Literature 2: JP2000-30683 A

SUMMARY OF INVENTION

Technical Problem

The present invention aims to provide a method for producing a porous membrane. The method allows: avoidance of use of a solvent that places a large load on the environment; relatively easy control of parameters such as the porosity and the pore diameter; and high chemical stability of a resultant porous membrane.

Solution to Problem

That is, the present invention provides a method for producing a porous epoxy resin membrane, the method including the steps of: preparing an epoxy resin composition containing an epoxy resin, a curing agent represented by $H_2N\text{-}(CH_2)_n\text{-}NH_2$ where n is an integer from 4 to 8, and a porogen; forming a cured product of the epoxy resin composition into a sheet shape or curing a sheet-shaped formed body of the epoxy resin composition, so as to obtain an epoxy resin sheet; and removing the porogen from the epoxy resin sheet by means of a halogen-free solvent.

In another aspect, the present invention provides a method for producing a separator for nonaqueous electrolyte electricity storage devices that has a thickness ranging from 5 to 50 $\mu$m, the method including the steps of: preparing an epoxy resin composition containing an epoxy resin, a curing agent represented by $H_2N\text{-}(CH_2)_n\text{-}NH_2$ where n is an integer from 4 to 8, and a porogen; forming a cured product of the epoxy resin composition into a sheet shape or curing a sheet-shaped formed body of the epoxy resin composition, so as to obtain an epoxy resin sheet; and removing the porogen from the epoxy resin sheet by means of a halogen-free solvent.

In still another aspect, the present invention provides a method for producing a nonaqueous electrolyte electricity storage device, the method including the steps of: preparing a cathode, an anode, and a separator; and assembling an electrode group from the cathode, the anode, and the separator. The separator has a thickness ranging from 5 to 50 $\mu$m, and the step of preparing the separator includes the steps of: (i) preparing an epoxy resin composition containing an epoxy resin, a curing agent represented by $H_2N\text{-}(CH_2)_n\text{-}NH_2$ where n is an integer from 4 to 8, and a porogen; (ii) forming a cured product of the epoxy resin composition into a sheet shape or curing a sheet-shaped formed body of the epoxy resin composition, so as to obtain an epoxy resin sheet; and (iii) removing the porogen from the epoxy resin sheet by means of a halogen-free solvent.

In still another aspect, the present invention provides a porous epoxy resin membrane including: a three-dimensional network structure composed of an epoxy resin and including a structure represented by $N\text{-}(CH_2)_n\text{-}N$ where n is an integer from 4 to 8; and pores communicating with each other between a front surface and a back surface of the porous epoxy resin membrane.

In still another aspect, the present invention provides a separator for nonaqueous electrolyte electricity storage devices, including: a three-dimensional network structure composed of an epoxy resin and including a structure represented by $N\text{-}(CH_2)_n\text{-}N$ where n is an integer from 4 to 8; and pores communicating with each other so that ions can move between a front surface and a back surface of the separator. The separator has a thickness ranging from 5 to 50 $\mu$m.

In still another aspect, the present invention provides a nonaqueous electrolyte electricity storage device including: a cathode; an anode; the separator of the present invention disposed between the cathode and the anode; and an electrolyte having ion conductivity.

In still another aspect, the present invention provides a composite semipermeable membrane including: a porous epoxy resin membrane including: a three-dimensional network structure composed of an epoxy resin and including a structure represented by $N\text{-}(CH_2)_n\text{-}N$ where n is an integer from 4 to 8; and pores communicating with each other between a front surface and a back surface of the porous epoxy resin membrane; and a skin layer formed on a surface of the porous epoxy resin membrane.

In still another aspect, the present invention provides a method for producing a composite semipermeable membrane, the method including the steps of: preparing an epoxy resin composition containing an epoxy resin, a curing agent represented by $H_2N\text{-}(CH_2)_n\text{-}NH_2$ where n is an integer from 4 to 8, and a porogen; forming a cured product of the epoxy resin composition into a sheet shape or curing a sheet-shaped formed body of the epoxy resin composition, so as to obtain an epoxy resin sheet; removing the porogen from the epoxy resin sheet by means of a halogen-free solvent so as to form a porous epoxy resin membrane; and forming a skin layer on a surface of the porous epoxy resin membrane.

Advantageous Effects of Invention

According to the present invention, a porogen is removed from an epoxy resin sheet by means of a halogen-free solvent, and thus a porous epoxy resin membrane is obtained. Therefore, the use of a solvent that places a large load on the environment can be avoided. In addition, according to the present invention, parameters such as the porosity and the pore diameter can be controlled relatively easily not only by appropriately selecting the content and type of the porogen but also by using a curing agent represented by $H_2N\text{-}(CH_2)_n\text{-}NH_2$ where n is an integer from 4 to 8. Furthermore, according to the present invention, a porous epoxy resin membrane having high chemical stability can be provided.

BRIEF DESCRIPTION OF DRAWINGS

FIG. 1 is a schematic cross-sectional view of a nonaqueous electrolyte electricity storage device according to one embodiment of the present invention.
FIG. 2 is a schematic diagram showing a cutting step.

DESCRIPTION OF EMBODIMENTS

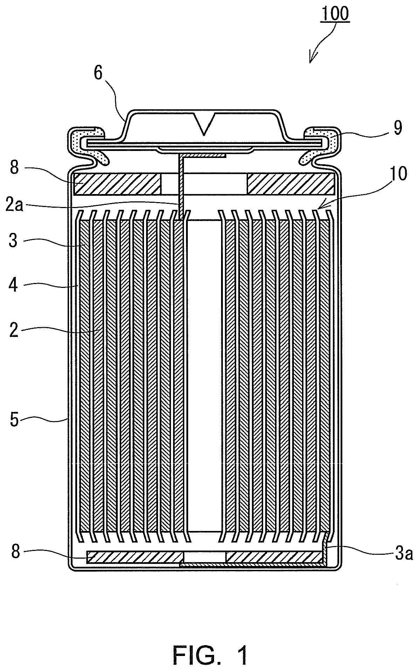

Hereinafter, one embodiment of a nonaqueous electrolyte electricity storage device of the present invention will be described with reference to the accompanying drawings.
As shown in FIG. 1, a nonaqueous electrolyte electricity storage device 100 according to the present embodiment includes a cathode 2, an anode 3, a separator 4, and a case 5. The separator 4 is disposed between the cathode 2 and the anode 3. The cathode 2, the anode 3, and the separator 4 are wound together to form an electrode group 10 as an electricity generating element. The electrode group 10 is contained in the case 5 having a bottom. The electricity storage device 100 is typically a lithium-ion secondary battery.

In the present embodiment, the case 5 has a hollow-cylindrical shape. That is, the electricity storage device 100 has a hollow-cylindrical shape. However, the shape of the electricity storage device 100 is not particularly limited. For example, the electricity storage device 100 may have a flat rectangular shape. In addition, the electrode group 10 need not have a wound structure. A plate-shaped electrode group may be formed by simply stacking the cathode 2, the separator 4, and the anode 3. The case 5 is made of a metal such as stainless steel or aluminum. Furthermore, the electrode group 10 may be contained in a case made of a material having flexibility. The material having flexibility is composed of, for example, an aluminum foil and resin films attached to both surfaces of the aluminum foil.

The electricity storage device 100 further includes a cathode lead 2a, an anode lead 3a, a cover 6, a packing 9, and two insulating plates 8. The cover 6 is fixed at an opening of the case 5 via the packing 9. The two insulating plates 8 are disposed above and below the electrode group 10, respectively. The cathode lead 2a has one end connected electrically to the cathode 2 and the other end connected electrically to the cover 6. The anode lead 3a has one end connected electrically to the anode 3 and the other end connected electrically to the bottom of the case 5. The inside of the electricity storage device 100 is filled with a nonaqueous electrolyte (typically, a nonaqueous electrolyte solution) having ion conductivity. The nonaqueous electrolyte is impregnated into the electrode group 10. This makes it possible for ions (typically, lithium ions) to move between the cathode 2 and the anode 3 through the separator 4.

The cathode 2 can be composed of a cathode active material capable of absorbing and releasing lithium ions, a binder, and a current collector. For example, a cathode active material is mixed with a solution containing a binder to prepare a composite agent, the composite agent is applied to a cathode current collector and then dried, and thus the cathode 2 can be fabricated.

As the cathode active material, a commonly-known material used as a cathode active material for a lithium-ion secondary battery can be used. Specifically, a lithium-containing transition metal oxide, a lithium-containing transition metal phosphate, a chalcogen compound, or the like, can be used as the cathode active material. Examples of the lithium-containing transition metal oxide include $LiCoO_2$, $LiMnO_2$, $LiNiO_2$, and substituted compounds thereof in which part of the transition metal is substituted by another metal. Examples of the lithium-containing transition metal phosphate include $LiFePO_4$, and a substituted compound of $LiFePO_4$ in which part of the transition metal (Fe) is substituted by another metal. Examples of the chalcogen compound include titanium disulfide and molybdenum disulfide.

A commonly-known resin can be used as the binder. Examples of resins which can be used as the binder include: fluorine-based resins such as polyvinylidene fluoride (PVDF), hexafluoropropylene, and polytetrafluoroethylene; hydrocarbon-based resins such as styrene-butadiene rubbers and ethylene-propylene terpolymer; and mixtures thereof. Conductive powder such as carbon black may be contained in the cathode 2 as a conductive additive.

A metal material excellent in oxidation resistance, for example, aluminum processed into the form of foil or mesh, can be suitably used as the cathode current collector.

The anode 3 can be composed of an anode active material capable of absorbing and releasing lithium ions, a binder, and a current collector. The anode 3 can also be fabricated by the same method as that for the cathode 2. The same binder as used for the cathode 2 can be used for the anode 3.

As the anode active material, a commonly-known material used as an anode active material for a lithium-ion secondary battery can be used. Specifically, a carbon-based active material, an alloy-based active material that can form an alloy with lithium, a lithium-titanium composite oxide (e.g., $Li_4Ti_5O_{12}$), or the like, can be used as the anode active material. Examples of the carbon-based active material include: calcined products of coke, pitch, phenolic resins, polyimides, cellulose etc.; artificial graphite; and natural graphite. Examples of the alloy-based active material include aluminum, tin, tin compounds, silicon, and silicon compounds.

A metal material excellent in reduction stability, for example, copper or a copper alloy processed into the form of foil or mesh, can be suitably used as the anode current collector. In the case where a high-potential anode active material such as a lithium-titanium composite oxide is used, aluminum processed into the form of foil or mesh can also be used as the anode current collector.

The nonaqueous electrolyte solution typically contains a nonaqueous solvent and an electrolyte. Specifically, an electrolyte solution obtained by dissolving a lithium salt (electrolyte) in a nonaqueous solvent can be suitably used. In addition, a gel electrolyte containing a nonaqueous electrolyte solution, a solid electrolyte obtained by dissolving and decomposing a lithium salt in a polymer such as polyethylene oxide, or the like, can also be used as the nonaqueous electrolyte. Examples of the lithium salt include lithium tetrafluoroborate ($LiBF_4$), lithium hexafluorophosphate ($LiPF_6$), lithium perchlorate ($LiClO_4$), and lithium trifluoromethanesulfonate ($LiCF_3SO_3$). Examples of the nonaqueous solvent include propylene carbonate (PC), ethylene carbonate (EC), methyl ethyl carbonate (MEC), 1,2-dimethoxyethane (DME), γ-butyrolactone (γ-BL), and mixtures thereof.

Next, the separator 4 will be described in detail.

In the present embodiment, the separator 4 is formed of a porous epoxy resin membrane having a three-dimensional network structure and pores. Adjacent pores may communicate with each other so that ions can move between the front surface and the back surface of the separator 4, i.e., so that ions can move between the cathode 2 and the anode 3. The separator 4 has a thickness in the range of, for example, 5 to 50 μm. If the separator 4 is too thick, it becomes difficult for ions to move between the cathode 2 and the anode 3. Although it is possible to produce the separator 4 having a thickness less than 5 μm, the thickness is preferably 5 μm or more, and particularly preferably 10 μm or more, in order to ensure reliability of the electricity storage device 100.

For example, the separator 4 has a porosity in the range of 20 to 80%, and an average pore diameter in the range of 0.02 to 1 μm. If the porosity and average pore diameter are adjusted in such ranges, the separator 4 can fulfill a required function sufficiently.

The porosity can be measured by the following method. First, an object to be measured is cut into predetermined dimensions (e.g., a circle having a diameter of 6 cm), and the volume and weight are obtained. The obtained results are substituted into the following expression to calculate the porosity.

$$\text{Porosity } (\%) = 100 \times (V - (W/D))/V$$

V: Volume (cm$^3$)
W: Weight (g)
D: Average density of components (g/cm$^3$)

The average pore diameter can be obtained by observing a cross-section of the separator 4 with a scanning electron microscope. Specifically, pore diameters are obtained through image processing of each of the pores present within a visual-field width of 60 μm and within a predetermined depth from the surface (e.g., 1/5 to 1/100 of the thickness of the separator 4), and the average value of the pore diameters can be obtained as the average pore diameter. The image processing can be executed by means of, for example, a free software "Image J" or "Photoshop" manufactured by Adobe Systems Incorporated.

In addition, the separator 4 may have an air permeability (Gurley value) in the range of, for example, 1 to 1000 seconds/100 cm$^3$, in particular, 10 to 1000 seconds/100 cm$^3$. If the separator 4 has an air permeability within such a range, ions can easily move between the cathode 2 and the anode 3. The air permeability can be measured according to the method specified in Japan Industrial Standards (JIS) P 8117.

Next, the method for producing the porous epoxy resin membrane used for the separator 4 will be described.

For example, the porous epoxy resin membrane can be produced by any of the following methods (a), (b), and (c). The methods (a) and (b) are the same in that an epoxy resin composition is formed into a sheet shape, and then a curing step is carried out. The method (c) is characterized in that a block-shaped cured product of an epoxy resin is made, and the cured product is formed into a sheet shape.

Method (a)

An epoxy resin composition containing an epoxy resin, a curing agent, and a porogen is applied onto a substrate so that a sheet-shaped formed body of the epoxy resin composition is obtained. Subsequently, the sheet-shaped formed body of the epoxy resin composition is heated to cause the epoxy resin to be three-dimensionally cross-linked. At this time, a bicontinuous structure is formed as a result of phase separation between the cross-linked epoxy resin and the porogen. Subsequently, the obtained epoxy resin sheet is washed to remove the porogen, and is then dried to obtain a porous epoxy resin membrane having a three-dimensional network structure and pores communicating with each other. The type of the substrate is not particularly limited. A plastic substrate, a glass substrate, a metal plate, or the like, can be used as the substrate.

Method (b)

An epoxy resin composition containing an epoxy resin, a curing agent, and a porogen is applied onto a substrate. Subsequently, another substrate is placed onto the applied epoxy resin composition to fabricate a sandwich-like structure. Spacers (e.g., double-faced tapes) may be provided at four corners of the substrate in order to keep a certain space between the substrates. Next, the sandwich-like structure is heated to cause the epoxy resin to be three-dimensionally cross-linked. At this time, a bicontinuous structure is formed as a result of phase separation between the cross-linked epoxy resin and the porogen. Subsequently, the obtained epoxy resin sheet is taken out, washed to remove the porogen, and then dried to obtain a porous epoxy resin membrane having a three-dimensional network structure and pores communicating with each other. The type of the substrate is not particularly limited. A plastic substrate, a glass substrate, a metal plate, or the like, can be used as the substrate. In particular, a glass substrate can be suitably used.

Method (c)

An epoxy resin composition containing an epoxy resin, a curing agent, and a porogen is filled into a metal mold having a predetermined shape. Subsequently, the epoxy resin is caused to be three-dimensionally cross-linked to fabricate a hollow-cylindrical or solid-cylindrical cured product of the epoxy resin composition. At this time, a bicontinuous structure is formed as a result of phase separation between the cross-linked epoxy resin and the porogen. Subsequently, the surface part of the cured product of the epoxy resin composition is cut with a predetermined thickness while rotating the cured product about the hollow cylinder axis or solid cylinder axis, to fabricate an epoxy resin sheet having a long strip shape. Then, the epoxy resin sheet is washed to remove the porogen contained in the sheet, and is then dried to obtain a porous epoxy resin membrane having a three-dimensional network structure and pores communicating with each other.

The method (c) will be described in detail. The step of preparing an epoxy resin composition, the step of curing an epoxy resin, the step of removing a porogen, and the like, are the same among all the methods. In addition, usable materials are also the same among all the methods.

With the method (c), a porous epoxy resin membrane can be produced through the following main steps.

(i) Preparing an epoxy resin composition
(ii) Forming a cured product of the epoxy resin composition into a sheet shape
(iii) Removing a porogen from the epoxy resin sheet

First, an epoxy resin composition containing an epoxy resin, a curing agent, and a porogen (micropore-forming agent) is prepared. Specifically, a uniform solution is prepared by dissolving an epoxy resin and a curing agent in a porogen.

As the epoxy resin, either an aromatic epoxy resin or a non-aromatic epoxy resin can be used. Examples of the aromatic epoxy resin include polyphenyl-based epoxy resins, epoxy resins containing a fluorene ring, epoxy resins containing triglycidyl isocyanurate, and epoxy resins containing a heteroaromatic ring (e.g., a triazine ring). Examples of polyphenyl-based epoxy resins include bisphenol A-type epoxy resins, brominated bisphenol A-type epoxy resins, bisphenol F-type epoxy resins, bisphenol AD-type epoxy resins, stilbene-type epoxy resins, biphenyl-type epoxy resins, bisphenol A novolac-type epoxy resins, cresol novolac-type epoxy resins, diaminodiphenylmethane-type epoxy resins, and tetrakis(hydroxyphenyl)ethane-based epoxy resins. Examples of non-aromatic epoxy resins include aliphatic glycidyl ether-type epoxy resins, aliphatic glycidyl ester-type epoxy resins, cycloaliphatic glycidyl ether-type epoxy resins, cycloaliphatic glycidylamine-type epoxy resins, and cycloaliphatic glycidyl ester-type epoxy resins. These may be used singly, or two or more thereof may be used in combination.

Among these, at least one that is selected from the group consisting of bisphenol A-type epoxy resins, brominated bisphenol A-type epoxy resins, bisphenol F-type epoxy resins, bisphenol AD-type epoxy resins, epoxy resins containing a fluorene ring, epoxy resins containing triglycidyl isocyanurate, cycloaliphatic glycidyl ether-type epoxy resins, cycloaliphatic glycidylamine-type epoxy resins, and cycloaliphatic glycidyl ester-type epoxy resins, and that has an epoxy equivalent of 6000 or less and a melting point of 170°C or lower, can be suitably used. The use of these epoxy resins allows formation of a uniform three-dimensional network structure and uniform pores, and also allows excellent chemical resistance and high strength to be imparted to the porous epoxy resin membrane.

In the present invention, a compound represented by $H_2N-(CH_2)_n-NH_2$ where n is an integer from 4 to 8 is used as the curing agent. Specific examples of the compound include 1,6-diaminohexane, 1,4-diaminobutane, and 1,8-diaminooctane. These may be used singly, or two or more thereof may be used in combination. The use of these curing agents makes it possible to obtain a porous epoxy resin membrane including: a three-dimensional network structure composed of an epoxy resin and including a structure that is derived from the curing agent and that is represented by $N-(CH_2)_n-N$ where n is an integer from 4 to 8; and pores communicating with each other between the front surface and the back surface of the porous epoxy resin membrane. The porous epoxy resin membrane has a uniform three-dimensional network structure and uniform pores, and also has high chemical stability. In particular, the porous epoxy resin membrane exhibits long-term stability in an electrolyte solution. It is preferable to use 1,6-diaminohexane, from the standpoint of high crosslink density and higher chemical stability of the resultant porous epoxy resin membrane, and from the standpoint of availability and handleability.

The curing agent represented by $H_2N-(CH_2)_n-NH_2$ where n is an integer from 4 to 8 is highly reactive. When the equivalent ratio of the curing agent to the epoxy resin is 1 or less, a primary amine and a secondary amine hardly remain in the resultant porous epoxy resin membrane. This can be analyzed by near-infrared spectroscopy (FT-NIR), since both a primary amine and a secondary amine have a distinctive absorption peak around 6530 cm$^{-1}$. Accordingly, when the porous epoxy resin membrane obtained by the present invention is analyzed by FT-NIR, an absorption peak hardly appears around 6530 cm$^{-1}$. Even if an absorption peak appears around 6530 cm$^{-1}$, the peak is very small. In order to perform an accurate measurement with FT-NIR, the porous epoxy resin membrane needs to be made non-porous in advance, for example, by applying pressure, because measurement of a porous body is affected by scattering in the near-infrared region.

A primary amine and a secondary amine are oxidized in the air in some cases, and react readily also with acids. However, a primary amine or a secondary amine hardly remains in the porous epoxy resin membrane of the present invention. Therefore, the porous epoxy resin membrane is less likely to be oxidized in the air, and is thus less prone to deterioration or color change such as yellowing. In addition, the porous epoxy resin membrane has high chemical stability, and thereby exhibits excellent long-term reliability and storage stability even when applied to uses that involve contact with various chemical substances.

The porogen can be a solvent capable of dissolving the epoxy resin and the curing agent. The porogen is also used as a solvent that can cause reaction-induced phase separation after the epoxy resin and the curing agent are polymerized. Specific examples of substances which can be used as the porogen include cellosolves such as methyl cellosolve and ethyl cellosolve, esters such as ethylene glycol monomethyl ether acetate and propylene glycol monomethyl ether acetate, glycols such as polyethylene glycol and polypropylene glycol, and ethers such as polyoxyethylene monomethyl ether and polyoxyethylene dimethyl ether. These may be used singly, or two or more thereof may be used in combination.

Among these, at least one selected from the group consisting of methyl cellosolve, ethyl cellosolve, polyethylene glycol having a molecular weight of 600 or less, ethylene glycol monomethyl ether acetate, propylene glycol monomethyl ether acetate, polypropylene glycol, polyoxyethylene monomethyl ether, and polyoxyethylene dimethyl ether, can be suitably used. In particular, at least one selected from the group consisting of polyethylene glycol having a molecular weight of 200 or less, polypropylene glycol having a molecular weight of 500 or less, polyoxyethylene monomethyl ether, and propylene glycol monomethyl ether acetate, can be suitably used. The use of these porogens allows formation of a uniform three-dimensional network structure and uniform pores. These may be used singly, or two or more thereof may be used in combination.

In addition, a solvent in which a reaction product of the epoxy resin and the curing agent is soluble can be used as the porogen even if the epoxy resin or the curing agent is individually insoluble or poorly-soluble in the solvent at normal temperature. Examples of such a porogen include a brominated bisphenol A-type epoxy resin ("Epicoat 5058" manufactured by Japan Epoxy Resin Co., Ltd).

The porosity, the average pore diameter, and the pore diameter distribution of the porous epoxy resin membrane vary depending on the types of the materials, the blending ratio of the materials, and reaction conditions (e.g., heating temperature and heating time at the time of reaction-induced phase separation). Accordingly, in order to obtain the intended porosity, average pore diameter, and pore diameter distribution, optimal conditions are preferably selected. In addition, by control of the molecular weight of the cross-linked epoxy resin, the molecular weight distribution, the viscosity of the solution, the cross-linking reaction rate etc. at the time of phase separation, a bicontinuous structure of the cross-linked epoxy resin and the porogen can be fixed in a particular state, and thus a stable porous structure can be obtained.

For example, the blending ratio of the curing agent to the epoxy resin is such that the curing agent equivalent is 0.6 to 1.5, and preferably 0.8 to 1.2, per one epoxy group equivalent. An appropriate curing agent equivalent contributes to improvement in the characteristics of the porous epoxy resin membrane, such as the heat resistance, the chemical durability, and the mechanical characteristics.

The curing agent used in the present invention and represented by $H_2N-(CH_2)_n-NH_2$ where n is an integer from 4 to 8 is highly reactive, and has the possibility of causing high heat generation at the time of curing. Therefore, it is preferable that the curing agent should be added stepwise, and curing should be caused with heat generation being reduced. Reducing heat generation allows curing to proceed relatively uniformly, and also makes it easy to control the pore diameter of the porous epoxy resin membrane.

In order to obtain an intended porous structure, a curing accelerator may be added to the solution in addition to the curing agent. Examples of the curing accelerator include tertiary amines such as triethylamine and tributylamine, and imidazoles such as 2-phenol-4-methylimidazole, 2-ethyl-4-methylimidazole, and 2-phenol-4,5-dihydroxyimidazole.

For example, 40 to 80% by weight of the porogen can be used relative to the total weight of the epoxy resin, the curing agent, and the porogen. The use of an appropriate amount of the porogen allows formation of a porous epoxy resin membrane having the desired porosity, average pore diameter, and air permeability.

One example of the method for adjusting the average pore diameter of the porous epoxy resin membrane within a desired range is to mix and use two or more types of epoxy resins having different epoxy equivalents. At this time, the difference between the epoxy equivalents is preferably 100 or more, and an epoxy resin which is liquid at normal temperature and an epoxy resin which is solid at normal temperature are mixed and used in some cases.

Next, a cured product of the epoxy resin composition is fabricated from the solution containing the epoxy resin, the curing agent, and the porogen. Specifically, the solution is filled into a metal mold, and heated as necessary. A cured product having a predetermined shape can be obtained by causing the epoxy resin to be three-dimensionally cross-linked. At this time, a bicontinuous structure is formed as a result of phase separation between the cross-linked epoxy resin and the porogen.

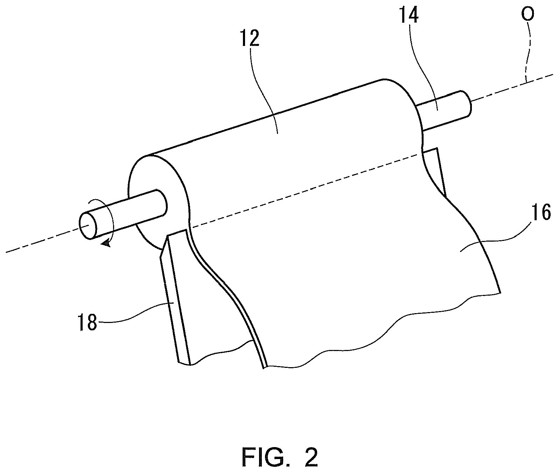

The shape of the cured product is not particularly limited. If a solid-cylindrical or hollow-cylindrical metal mold is used, a cured product having a hollow-cylindrical or solid-cylindrical shape can be obtained. In the case of a cured product having a hollow-cylindrical or solid-cylindrical shape, the cutting step described later (see FIG. 2) is easy to carry out.

The temperature and time required for curing the epoxy resin composition vary depending on the types of the epoxy resin and the curing agent, and thus are not particularly limited. In order to obtain a porous epoxy resin membrane having pores which are distributed uniformly and have uniform pore diameters, the curing process can be carried out at a room temperature. In the case of curing at a room temperature, the temperature is about 20 to 40°C, and the time is about 3 to 100 hours, and preferably about 20 to 50 hours. In the case of curing by heating, the temperature is about 40 to 120°C, and preferably about 60 to 100°C, and the time is about 10 to 300 minutes, and preferably about 30 to 180 minutes. After the curing process, postcuring (post-treatment) may be performed in order to increase the degree of cross-linking of the cross-linked epoxy resin. The conditions for the postcuring are not particularly limited. The temperature is a room temperature, or about 50 to 160°C, and the time is about 2 to 48 hours.

The dimensions of the cured product are not particularly limited. In the case where the cured product has a hollow-cylindrical or solid-cylindrical shape, the diameter of the cured product is, for example, 20 cm or more, and preferably 30 to 150 cm, from the standpoint of production efficiency of the porous epoxy resin membrane. The length (in the axial direction) of the cured product can also be set as appropriate taking into account the dimensions of the porous epoxy resin membrane to be obtained. The length of the cured product is, for example, 20 to 200 cm. From the standpoint of handleability, the length is preferably 20 to 150 cm, and more preferably 20 to 120 cm.

Next, the cured product is formed into a sheet shape. The cured product having a hollow-cylindrical or solid-cylindrical shape can be formed into a sheet shape by the following method. Specifically, a cured product 12 is mounted on a shaft 14 as shown in FIG. 2. The surface part of the cured product 12 is cut (sliced) with a predetermined thickness by means of a cutting blade 18 (slicer) so that an epoxy resin sheet 16 having a long strip shape is obtained. More specifically, the surface part of the cured product 12 is skived while the cured product 12 is being rotated about a hollow cylinder axis O (or solid cylinder axis) of the cured product 12 relative to the cutting blade 18. With this method, the epoxy resin sheet 16 can be efficiently fabricated.

The line speed during cutting of the cured product 12 is in the range of, for example, 2 to 70 m/min. The thickness of the epoxy resin sheet 16 is determined depending on the intended thickness (5 to 50 $\mu$m) of the porous epoxy resin membrane. Removal of the porogen and the subsequent drying slightly reduce the thickness. Therefore, the epoxy resin sheet 16 generally has a thickness slightly greater than the intended thickness of the porous epoxy resin membrane. The length of the epoxy resin sheet 16 is not particularly limited. From the standpoint of the production efficiency of the epoxy resin sheet 16, the length is, for example, 100 m or more, and preferably 1000 m or more.

Finally, the porogen is extracted and removed from the epoxy resin sheet 16. Specifically, the porogen can be removed from the epoxy resin sheet 16 by immersing the epoxy resin sheet 16 in a halogen-free solvent. Thus, the porous epoxy resin membrane which is usable as the separator 4 can be obtained.

As the halogen-free solvent for removing the porogen from the epoxy resin sheet 16, at least one selected from the group consisting of water, DMF (N,N-dimethylformamide), DMSO (dimethylsulfoxide), and THF (tetrahydrofuran), can be used depending on the type of the porogen. In addition, a supercritical fluid of water, carbon dioxide, or the like, can also be used as the solvent for removing the porogen. In order to actively remove the porogen from the epoxy resin sheet 16, ultrasonic washing may be performed, or the solvent may be heated and then used.

The type of a washing device for removing the porogen is not particularly limited either, and a commonly-known washing device can be used. In the case where the porogen is removed by immersing the epoxy resin sheet 16 in the solvent, a multi-stage washer having a plurality of washing tanks can be suitably used. The number of stages of washing is more preferably three or more. In addition, washing by means of counterflow which substantially corresponds to multi-stage washing may be performed. Furthermore, the temperature or the type of the solvent may be changed for each stage of washing.

After removal of the porogen, the porous epoxy resin membrane is subjected to a drying process. The conditions for drying are not particularly limited. The temperature is generally about 40 to 120°C, and preferably about 50 to 100°C. The drying time is about 10 seconds to 5 minutes. For the drying process, a dryer can be used that employs a commonly-known sheet drying method, such as a tenter method, a floating method, a roll method, or a belt method. A plurality of drying methods may be combined.

With the method of the present embodiment, the porous epoxy resin membrane which is usable as the separator 4 can be produced very easily. Since some step such as a stretching step required for production of conventional porous polyolefin membranes can be omitted, the porous epoxy resin membrane can be produced with high productivity. In addition, since a conventional porous polyolefin membrane is subjected to high temperature and high shear force during the production process, an additive such as an antioxidant needs to be used. By contrast, with the method of the present embodiment, the porous epoxy resin membrane can be produced without being subjected to high temperature and high shear force. Therefore, the need for use of an additive such as an antioxidant as contained in a conventional porous polyolefin membrane can be eliminated. Furthermore, since low-cost materials can be used as the epoxy resin, the curing agent, and the porogen, the production cost of the separator 4 can be reduced.

The separator 4 may consist only of the porous epoxy resin membrane, or may be composed of a stack of the porous epoxy resin membrane and another porous material. Examples of the other porous material include porous polyolefin membranes such as porous polyethylene membranes and porous polypropylene membranes, porous cellulose membranes, and porous fluorine resin membranes. The other porous material may be provided on only one surface or both surfaces of the porous epoxy resin membrane.

Also, the separator 4 may be composed of a stack of the porous epoxy resin membrane and a reinforcing member. Examples of the reinforcing member include woven fabrics and non-woven fabrics. The reinforcing member may be provided on only one surface or both surfaces of the porous epoxy resin membrane.

As described above, the porous epoxy resin membrane of the present invention is suitable for a separator for nonaqueous electrolyte electricity storage devices. Due to its high chemical stability, the porous epoxy resin membrane can be advantageously used for a water treatment membrane or the like, as well as for a separator for nonaqueous electrolyte electricity storage devices. Specifically, the porous epoxy resin membrane of the present invention can be used as, for example, a porous support of a composite semipermeable membrane composed of the porous support and a skin layer formed on the porous support. If the porous epoxy resin membrane of the present invention is used for composite semipermeable membranes, a composite semipermeable membrane that has a high chemical stability and remains free from deterioration over a long period can be obtained, and a membrane element using the composite semipermeable membrane can have a long life.

Another embodiment of the present invention is a composite semipermeable membrane including: a porous epoxy resin membrane that includes three-dimensional network structure composed of an epoxy resin and having a structure represented by $N\text{-}(CH_2)_n\text{-}N$ where n is an integer from 4 to 8, and that includes pores communicating with each other between a front surface and a back surface of the porous epoxy resin membrane; and a skin layer formed on a surface of the porous epoxy resin membrane. Hereinafter, the composite semipermeable membrane and a production method thereof will be described.

In the present embodiment, the thickness of the porous epoxy resin membrane is, for example, about 30 to 250 $\mu$m, and preferably 50 to 200 $\mu$m.

A material for forming the skin layer is not particularly limited, and examples of the material include cellulose acetate, ethyl cellulose, polyethers, polyesters, and polyamides.

In the present embodiment, it is preferable to use a skin layer containing a polyamide-based resin obtained by polymerizing a polyfunctional amine component and a polyfunctional acid halide component.

Polyfunctional amine components mean polyfunctional amines having two or more reactive amino groups, and include aromatic, aliphatic, and cycloaliphatic polyfunctional amines. Examples of aromatic polyfunctional amines include m-phenylenediamine, p-phenylenediamine, o-phenylenediamine, 1,3,5-triaminobenzene, 1,2,4-triaminobenzene, 3,5-diaminobenzoic acid, 2,4-diaminotoluene, 2,6-diaminotoluene, N,N'-dimethyl-m-phenylenediamine, 2,4-diaminoanisole, amidol, and xylylenediamine. Examples of aliphatic polyfunctional amines include ethylenediamine, propylenediamine, tris(2-aminoethyl)amine, and N-phenyl-ethylenediamine. Examples of cycloaliphatic polyfunctional amines include 1,3-diaminocyclohexane, 1,2-diaminocyclohexane, 1,4-diaminocyclohexane, piperazine, 2,5-dimethylpiperazine, and 4-aminomethylpiperazine. These polyfunctional amines may be used singly, or two or more thereof may be used in combination. In order to obtain a skin layer having high salt rejection performance, an aromatic polyfunctional amine is preferably used.

Polyfunctional acid halide components mean polyfunctional acid halides having two or more reactive carbonyl groups or reactive sulfonyl groups. Polyfunctional acid halides include aromatic, aliphatic, and cycloaliphatic polyfunctional acid halides. Examples of aromatic polyfunctional acid halides include trimesic acid trichloride, terephthalic acid dichloride, isophthalic acid dichloride, biphenyldicarboxylic acid dichloride, naphthalenedicarboxylic acid dichloride, benzenetrisulfonic acid trichloride, benzenedisulfonic acid dichloride, and chlorosulfonyl benzenedicarboxylic acid dichloride. Examples of aliphatic polyfunctional acid halides include propanedicarboxylic acid dichloride, butanedicarboxylic acid dichloride, pentanedicarboxylic acid dichloride, propanetricarboxylic acid trichloride, butanetricarboxylic acid trichloride, pentanetricarboxylic acid trichloride, glutaryl halides, and adipoyl halides. Examples of cycloaliphatic polyfunctional acid halides include cyclopropanetricarboxylic acid trichloride, cyclobutanetetracarboxylic acid tetrachloride, cyclopentanetricarboxylic acid trichloride, cyclopentanetetracarboxylic acid tetrachloride, cyclohexanetricarboxylic acid trichloride, tetrahydrofurantetracarboxylic acid tetrachloride, cyclopentanedicarboxylic acid dichloride, cyclobutanedicarboxylic acid dichloride, cyclohexanedicarboxylic acid dichloride, and tetrahydrofurandicarboxylic acid dichloride. These polyfunctional acid halides may be used singly or two or more thereof may be used in combination. In order to obtain a skin layer having high salt rejection performance, an aromatic polyfunctional acid halide is preferably used. In addition, a crosslink structure is preferably formed using a polyfunctional acid halide having three or more functional groups as at least part of the polyfunctional acid halide component.

Furthermore, in order to improve the performance of the skin layer containing a polyamide-based resin, the polyamide-based resin may be copolymerized with a polymer such as polyvinyl alcohol, polyvinyl pyrrolidone, and polyacrylic acid, or with a polyalcohol such as sorbitol and glycerin.

The method for forming a skin layer containing a polyamide-based resin on a surface of the porous epoxy resin membrane is not particularly limited, and any commonly-known method can be used. Examples thereof include an interfacial polymerization method, a phase separation method, and a thin film application method. Specific examples of the interfacial polymerization method include: a method in which an amine aqueous solution containing a polyfunctional amine component and an organic solution containing a polyfunctional acid halide component are brought into contact with each other, and are interfacially polymerized to form a skin layer, and the skin layer is placed on the porous epoxy resin membrane; and a method in which the interfacial polymerization is caused on the porous epoxy resin membrane to form a skin layer made of a polyamide-based resin directly on the porous epoxy resin membrane. The details of the conditions etc. of such interfacial polymerization methods are described in JP S58(1983)-24303 A, JP H1(1989)-180208 A etc., and the commonly-known techniques can be employed as appropriate.

Also when a skin layer made of a material other than polyamide-based resins is formed on the porous epoxy resin membrane, commonly-known techniques can be used as appropriate.

The composite semipermeable membrane of the present embodiment can be used for water treatment and the like in accordance with commonly-known methods.

Examples

Hereinafter, the present invention will be described in detail using examples. However, the present invention is not limited to the examples.

[Example 1]

A mold release agent (QZ-13 manufactured by Nagase ChemteX Corporation) was applied thinly to the inner side of a hollow-cylindrical stainless steel container having dimensions of $\phi$120 mm $\times$ 150 mm, and the container was dried in a dryer set at 80°C.

An epoxy resin/polypropylene glycol solution was prepared by dissolving 100 parts by weight of a bisphenol A-type epoxy resin (jER (registered trademark) 828 manufactured by Mitsubishi Chemical Corporation and having an epoxy equivalent of 184 to 194 g/eq.) in 147 parts by weight of polypropylene glycol (SANNIX PP-400 manufactured by Sanyo Chemical Industries, Ltd.). The solution was then added to the stainless steel container. Thereafter, 15 parts by weight of 1,6-diaminohexane (special grade, manufactured by Tokyo Chemical Industry Co., Ltd.) was added to the container.

Using Three-One Motor, the solution was stirred with a stirring blade at 200 rpm for 285 minutes. The temperature of the solution was increased by the stirring, and was 37.2°C immediately after the stirring. Subsequently, vacuum defoaming was carried out using a vacuum desiccator (VZ-type manufactured by AS ONE Corporation) at a room temperature at about 0.1 MPa until foams were vanished. Thereafter, the solution was left at 50°C for about 1 day to complete curing.

Next, an epoxy resin block was taken from the stainless steel container, and was continuously sliced with a thickness of 30 $\mu$m using a cutting lathe to obtain an epoxy resin sheet. After the epoxy resin sheet was washed with a mixed solvent of RO water and DMF (1:1, v/v) under ultrasonic wave for 10 minutes, the epoxy resin sheet was washed with only RO water under ultrasonic wave for 10 minutes, and then immersed in RO water for 12 hours to remove polypropylene glycol. Thereafter, drying at 80°C was performed for 2 hours, and thus a porous epoxy resin membrane was obtained.

[Example 2]

A mold release agent (QZ-13 manufactured by Nagase ChemteX Corporation) was applied thinly to the inner side of a hollow-cylindrical stainless steel container having dimensions of $\phi$120 mm $\times$ 150 mm, and the container was dried in a dryer set at 80°C.

An epoxy resin/polypropylene glycol solution was prepared by dissolving 100 parts by weight of a bisphenol A-type epoxy resin (jER (registered trademark) 828 manufactured by Mitsubishi Chemical Corporation and having an epoxy equivalent of 184 to 194 g/eq.) in 147 parts by weight of polypropylene glycol (SANNIX PP-400 manufactured by Sanyo Chemical Industries, Ltd.). The solution was then added to the stainless steel container. Thereafter, 15 parts by weight of 1,6-diaminohexane (special grade, manufactured by Tokyo Chemical Industry Co., Ltd.) was added to the container.

Using Three-One Motor, the solution was stirred with a stirring blade at 200 rpm for 15 minutes. Subsequently, vacuum defoaming was carried out using a vacuum dryer (VOS-301SD manufactured by Tokyo Rikakikai Co. Ltd) at 50°C at about 0.1 MPa until foams were vanished. Thereafter, the solution was left at 50°C for about 1 day to complete curing.

Next, an epoxy resin block was taken from the stainless steel container, and was continuously sliced with a thickness of 30 μm using a cutting lathe to obtain an epoxy resin sheet. After the epoxy resin sheet was washed with a mixed solvent of RO water and DMF (1:1, v/v) under ultrasonic wave for 10 minutes, the epoxy resin sheet was washed with only RO water under ultrasonic wave for 10 minutes, and then immersed in RO water for 12 hours to remove polypropylene glycol. Thereafter, drying at 80°C was performed for 2 hours, and thus a porous epoxy resin membrane was obtained.

[Example 3]

In a hollow-cylindrical poly-container of 10 L, 100 parts by weight of a bisphenol A-type epoxy resin (jER (registered trademark) 828 manufactured by Mitsubishi Chemical Corporation) and 3 parts by weight of 1,6-diaminohexane (special grade, manufactured by Tokyo Chemical Industry Co., Ltd.) were dissolved in 173 parts by weight (5400 g) of polypropylene glycol (SANNIX PP-400 manufactured by Sanyo Chemical Industries, Ltd.). Thus, an epoxy resin/amine/polypropylene glycol solution was prepared. Thereafter, 12 parts by weight of the diaminohexane was added to the poly-container. Subsequently, using a planetary centrifugal mixer, vacuum defoaming was performed at about 0.7 kPa while stirring was concurrently performed for 10 minutes at a revolution speed of 300 rpm under the conditions that the rotation/revolution ratio was 3/4. This stirring and defoaming process was repeated nine times. The temperature of the solution was increased by the stirring, and was 48.2°C immediately after the stirring.

Thereafter, an epoxy resin block was taken from the poly-container, and was continuously sliced with a thickness of 30 μm using a cutting lathe to obtain an epoxy resin sheet. A process of immersing the epoxy resin sheet in a mixed solvent of RO water and DMF (1:1, v/v) for 10 minutes was repeated three times, and then 10-minute immersion only in RO water was repeated twice to remove polypropylene glycol. Thereafter, drying at 80°C was performed for 2 hours, and thus a porous epoxy resin membrane was obtained.

[Comparative Example 1]

A polyethylene glycol solution of an epoxy resin was prepared by mixing 100 parts by weight of a bisphenol A-type epoxy resin (jER (registered trademark) 828 manufactured by Mitsubishi Chemical Corporation) with 197 parts by weight of polyethylene glycol (PEG 200 manufactured by Sanyo Chemical Industries, Ltd.).

A mold release agent (QZ-13 manufactured by Nagase ChemteX Corporation) was applied thinly to the inner surface of a hollow-cylindrical metal mold (made of stainless steel and having an inner diameter of 20 cm and a height of 30 cm), and the metal mold was dried in a dryer set at 40 to 100°C. The polyethylene glycol solution of the epoxy resin was filled into the metal mold, and 22 parts by weight of bis(4-aminocyclohexyl)methane was added. An epoxy resin composition containing an epoxy resin, a curing agent, and a porogen was thus prepared.

Next, the epoxy resin composition was stirred with an anchor blade at 300 rpm for 30 minutes. Subsequently, vacuum defoaming was carried out using a vacuum desiccator (VZ-type manufactured by AS ONE Corporation) at about 0.1 MPa until foams were vanished. After the epoxy resin composition was left for about 2 hours, the epoxy resin composition was stirred again for about 30 minutes, and was defoamed again under vacuum. Next, the epoxy resin composition was left at 25°C for 6 days to cure the epoxy resin composition. A cured product of the epoxy resin composition was thus obtained.

Next, the surface part of the cured product was continuously sliced with a thickness of 30 μm using a cutting lathe (manufactured by Toshiba Machine Co., Ltd) according to the method described with reference to FIG. 2, and thus an epoxy resin sheet was obtained. Polyethylene glycol was removed by washing the epoxy resin sheet with a 50 volume% DMF aqueous solution and subsequently with pure water. Thereafter, the epoxy resin sheet was dried at 70°C for 2 minutes, at 80°C for 1 minute, and then at 90°C for 1 minute, to obtain a porous epoxy resin membrane.

[Reference Example 1]

A porous polyethylene membrane was fabricated as a porous membrane of Reference Example 1 according to the method described below. First, 15 parts by weight of an ultrahigh molecular weight polyethylene (having a weight-average molecular weight of 1,000,000 and a melting point of 137°C) and 85 parts by weight of a liquid paraffin were uniformly mixed to obtain a slurry. The slurry was melted and kneaded with a twin-screw extruder at a temperature of 170°C, and then extruded with a coat hanger die into a sheet shape having a thickness of 2 mm. The obtained sheet was cooled while the sheet is being wound around a roll, and a gel sheet having a thickness of 1.3 mm was obtained. The gel sheet was heated to a temperature of 123°C, and was biaxially-stretched in the MD direction (machine direction) and the TD direction (width direction) simultaneously at stretch ratios of 4.5 and 5, respectively, to obtain a stretched film. The liquid paraffin was removed from the stretched film using decane, and then decane was dried at a room temperature to obtain a porous polyethylene membrane. The obtained porous polyethylene membrane was heat-treated in the air at a temperature of 125°C for 3 minutes. The porous polyethylene membrane of Reference Example 1 was thus obtained. The porous polyethylene membrane of Reference Example 1 had a thickness of about 16 $\mu$m.

(1) Porosity

The porosities of the porous membranes of Examples, Comparative Example, and Reference Example were calculated according to the method described in the above embodiment. In order to calculate the porosity of each of Examples and Comparative Example, the same epoxy resin and amine (curing agent) as used for fabricating the porous membrane of each Example were used to fabricate a non-porous body of the epoxy resin. The specific gravity of the non-porous body was used as an average density D. The results are shown in Table 1.

(2) Air permeability

The air permeabilities (Gurley values) of the porous membranes of Examples, Comparative Example, and Reference Example were measured according to the method specified in Japan Industrial Standards (JIS) P 8117. The results are shown in Table 1.

(3) Change in appearance

The porous membranes of Examples, Comparative Example, and Reference Example were stored in the air at a room temperature for 20 days, and their appearances were visually observed.

[Fabrication of lithium secondary battery]

Next, a lithium-ion secondary battery of Example 1 was fabricated using the porous epoxy resin membrane of Example 1 as a separator according to the method described below.

Mixed were 89 parts by weight of lithium cobalt oxide (Cellseed C-10 manufactured by Nippon Chemical Industrial Co., Ltd.), 10 parts by weight of acetylene black (Denka Black manufactured by Denki Kagaku Kogyo K.K.), and 5 parts by weight of PVDF (KF Polymer L#1120 manufactured by Kureha Chemical Industries Co., Ltd.). N-methyl-2-pyrrolidone was then added so that the solid content concentration became 15% by weight, and thereby a slurry for a cathode was obtained. Onto an aluminum foil (current collector) having a thickness of 20 $\mu$m, the slurry was applied with a thickness of 200 $\mu$m. The coating was dried under vacuum at 80°C for 1 hour and at 120°C for 2 hours, and then was compressed by roll pressing. A cathode having a cathode active material layer with a thickness of 100 $\mu$m was thus obtained.

Mixed were 80 parts by weight of mesocarbon microbead (MCMB6-28 manufactured by Osaka Gas Chemicals Co., Ltd.), 10 parts by weight of acetylene black (Denka Black manufactured by Denki Kagaku Kogyo K.K.), and 10 parts by weight of PVDF (KF Polymer L#1120 manufactured by Kureha Chemical Industries Co., Ltd.). N-methyl-2-pyrrolidone was then added so that the solid content concentration became 15% by weight, and thereby a slurry for an anode was obtained. Onto a copper foil (current collector) having a thickness of 20 $\mu$m, the slurry was applied with a thickness of 200 $\mu$m. The coating was dried under vacuum at 80°C for 1 hour and at 120°C for 2 hours, and then was compressed by roll pressing. An anode having an anode active material layer with a thickness of 100 $\mu$m was thus obtained.

Next, an electrode group was assembled from the cathode, the anode, and the separator. Specifically, the electrode group was obtained by stacking the cathode, the porous epoxy resin membrane (separator) of Example 1, and the anode. The electrode group was placed in an aluminum-laminated package, and then an electrolyte solution was injected into the package. The electrolyte solution used was a solution prepared by dissolving $LiPF_6$ at a concentration of 1.4 mol/liter in a solvent that contains ethylene carbonate and diethyl carbonate at a volume ratio of 1:2, and then adding vinylene carbonate thereto so that the concentration of vinylene carbonate was 1% by weight. The package was finally sealed to obtain the lithium-ion secondary battery of Example 1.

Lithium-ion secondary batteries were fabricated using the porous membranes of Example 2, Example 3, Comparative Example 1, and Reference Example 1 in the same manner as in Example 1.

A continuous charge test and a high-temperature storage test were carried out for each of the batteries of Examples 1 to 3, Comparative Example 1, and Reference Example 1. For each test, a new battery yet to be subjected to any other test was used. Each battery was charged and discharged repeatedly twice at a temperature of 25°C with a current of 0.2 CmA before the battery was subjected to the continuous charge test and the high-temperature storage test.

(4) Continuous charge test

Each battery was placed in a constant-temperature chamber having a temperature of 60°C, and the battery was charged with a constant current of 0.2 CmA and a constant voltage of 4.25 V. In charging with a current of 0.2 CmA, when the voltage of the battery has reached 4.25 V, the current value starts to decrease. However, a phenomenon in which the reduced current value increases again is observed in some cases. This phenomenon can be considered to suggest that some chemical reaction is caused in the vicinity of the cathode where there is high voltage and high activity. Accordingly, the current behavior in the above continuous charging was observed for 7 days as an indicator for evaluation of the oxidation resistance of the separator. A case in which the current value was not observed to increase again in the 7-day observation was evaluated as "Good", and a case in which the current value was observed to increase again was evaluated as "Poor". The results are shown in Table 1.

(5) High-temperature storage test

Each of the batteries of Examples 1 to 3, Comparative Example 1, Reference Example 1, and Reference Example 2 was continuously charged at a room temperature for 20 hours with a constant current of 0.2 CmA and then with a constant voltage of 4.2 V. Next, the battery was retained in a constant-temperature chamber having a temperature of 80°C for 4 days while the fully-charged state was being kept. Thereafter, the voltage of the battery was measured at a temperature of 80°C. The results are shown in Table 1.

[Table 1]

| | Thickness ($\mu$m) | Porosity (%) | Air permeability (sec/100 cm$^3$) | Change in appearance (Chemical stability) | Continuous charge characteristics | High-temperature storage characteristics (V) |
|---|---|---|---|---|---|---|
| Example 1 | 29 | 51 | 56 | Unchanged | Good | 4.11 |
| Example 2 | 28 | 44 | 435 | Unchanged | Good | 4.10 |
| Example 3 | 29 | 56 | 32 | Unchanged | Good | 4.11 |
| Com. Example 1 | 26 | 48 | 390 | Yellowed | Good | 4.08 |
| Ref. Example 1 | 16 | 39 | 270 | Unchanged | Poor | 3.80 |

As shown in Table 1, the porous epoxy resin membranes of Examples 1 to 3 had appropriate porosities and air permeabilities. In addition, the porous epoxy resin membranes of Examples 1 to 3 did not change in appearance, and were found to be excellent in chemical stability. By contrast, the porous epoxy resin membrane of Comparative Example 1 was wholly yellowed, and was thought to be inferior in chemical stability to the porous epoxy resin membranes of Examples 1 to 3. The yellowing is inferred to be due to oxidation of amine moiety.

The current values of the batteries using the porous epoxy resin membranes of Examples 1 to 3 were not observed to increase again in the 7-day continuous charge tests. That is, the porous epoxy resin membranes of Examples 1 to 3 were excellent in electrochemical oxidation resistance. By contrast, since the porous membrane of Reference Example 1 was poor in electrochemical oxidation resistance, the current value was observed to increase again.

The batteries using the porous epoxy resin membranes of Examples 1 to 3 exhibited high voltages even after high-temperature storage, and the voltages were higher than that of Comparative Example 1 for which bis(4-aminocyclohexyl)methane was used as the curing agent. That is, the porous epoxy resin membranes of Examples 1 to 3 existed stably in the batteries even at high temperature, and hardly caused any side reaction. The porous membrane of Reference Example 1 had low electrochemical oxidation resistance, and the voltage of the battery was reduced at high temperature.

INDUSTRIAL APPLICABILITY

A separator provided by the present invention can be suitably used for nonaqueous electrolyte electricity storage devices such as lithium-ion secondary batteries, and can be suitably used in particular for high-capacity secondary batteries required for vehicles, motorcycles, ships, construction machines, industrial machines, residential electricity storage systems, etc.

**Claims**

1. A method for producing a porous epoxy resin membrane, the method comprising the steps of
   preparing an epoxy resin composition containing an epoxy resin, a curing agent represented by $H_2N\text{-}(CH_2)_n\text{-}NH_2$ where n is an integer from 4 to 8, and a porogen;
   forming a cured product of the epoxy resin composition into a sheet shape or curing a sheet-shaped formed body of the epoxy resin composition, so as to obtain an epoxy resin sheet; and
   removing the porogen from the epoxy resin sheet by means of a halogen-free solvent.

2. The method for producing a porous epoxy resin membrane according to claim 1, wherein
   the cured product has a hollow-cylindrical or solid-cylindrical shape, and
   the step of forming the cured product into a sheet shape comprises the step of cutting a surface part of the cured product with a predetermined thickness so that the epoxy resin sheet obtained has a long strip shape.

3. The method for producing a porous epoxy resin membrane according to claim 2, wherein the cutting step comprises cutting the surface part of the cured product while rotating the cured product about a hollow cylinder axis or a solid cylinder axis of the cured product relative to a cutting blade.

4. The method for producing a porous epoxy resin membrane according to claim 1, wherein the porogen contains at least one selected from polyethylene glycol and polypropylene glycol.

5. The method for producing a porous epoxy resin membrane according to claim 1, wherein the solvent contains at least one selected from the group consisting of water, dimethylformamide, dimethylsulfoxide, and tetrahydrofuran.

6. A method for producing a separator for nonaqueous electrolyte electricity storage devices that has a thickness ranging from 5 to 50 $\mu$m, the method comprising the steps **for producing a porous epoxy resin membrane according to claim 1.**

7. A method for producing a nonaqueous electrolyte electricity storage device, the method comprising the steps of
   preparing a cathode, an anode, and a separator; and
   assembling an electrode group from the cathode, the anode, and the separator, wherein
   the separator has a thickness ranging from 5 to 50 $\mu$m, and
   the step of preparing the separator comprises the steps **for producing a porous epoxy resin membrane according to claim 1.**

8. A porous epoxy resin membrane comprising:

   a three-dimensional network structure composed of an epoxy resin and including a structure represented by $N\text{-}(CH_2)_n\text{-}N$ where n is an integer from 4 to 8; and
   pores communicating with each other between a front surface and a back surface of the porous epoxy resin membrane.

9. A separator for nonaqueous electrolyte electricity storage devices, comprising **a porous epoxy resin membrane according to claim 8,**
   the separator having a thickness ranging from 5 to 50 $\mu$m.

10. A nonaqueous electrolyte electricity storage device comprising:

    a cathode;
    an anode;

the separator according to claim 9 disposed between the cathode and the anode; and
an electrolyte having ion conductivity.

**11.** A composite semipermeable membrane comprising:

a porous epoxy resin membrane **according to claim 8;** and
a skin layer formed on a surface of the porous epoxy resin membrane.

**12.** A method for producing a composite semipermeable membrane, the method comprising:

**the steps of producing a porous epoxy resin membrane according to claim 1;** and
forming a skin layer on a surface of the porous epoxy resin membrane.

**Patentansprüche**

**1.** Verfahren zum Herstellen einer porösen Epoxidharzmembran, wobei das Verfahren die Schritte umfasst:

Vorbereiten einer Epoxidharzzusammensetzung, die ein Epoxidharz, ein durch $H_2N\text{-}(CH_2)_n\text{-}NH_2$ dargestelltes Aushärtungsmittel, wobei n eine ganze Zahl von 4 bis 8 ist, und ein Porogen enthält,
Ausbilden eines gehärteten Produktes aus der Epoxidharzzusammensetzung in eine Bogenform oder Aushärten eines bogenförmigen geformten Körpers aus der Epoxidharzzusammensetzung, um einen Epoxidharzbogen zu erhalten, und
Entfernen des Porogens aus dem Epoxidharzbogen mittels eines halogenfreien Lösungsmittels.

**2.** Verfahren zum Herstellen einer porösen Epoxidharzmembran nach Anspruch 1, wobei
das gehärtete Produkt eine hohlzylindrische oder vollzylindrische Form aufweist und
der Schritt des Ausbildens des gehärteten Produktes in eine Bogenform den Schritt des Ausschneidens eines Oberflächenteils des gehärteten Produktes mit einer vorbestimmten Dicke umfasst, so dass der erhaltene Epoxidharzbogen eine längliche Streifenform aufweist.

**3.** Verfahren zum Herstellen einer porösen Epoxidharzmembran nach Anspruch 2, wobei der Ausschneideschritt Ausschneiden des Oberflächenteils des gehärteten Produktes umfasst, während das gehärtete Produkt um eine Hohlzylinderachse oder eine Vollzylinderachse des gehärteten Produktes herum relativ zu einer Schneidklinge rotiert.

**4.** Verfahren zum Herstellen einer porösen Epoxidharzmembran nach Anspruch 1, wobei das Porogen wenigstens eines enthält, das aus Polyethylenglykol und Polypropylenglykol ausgewählt ist.

**5.** Verfahren zum Herstellen einer porösen Epoxidharzmembran nach Anspruch 1, wobei das Lösungsmittel wenigstens eines umfasst, das aus der aus Wasser, Dimethylformamid, Dimethylsulfoxid und Tetrahydrofuran bestehenden Gruppe ausgewählt ist.

**6.** Verfahren zum Herstellen eines Separators für nichtwässrige Elektrolytelektrizitätsspeichervorrichtungen, der eine Dicke aufweist, die im Bereich von 5 bis 50 $\mu$m liegt, wobei das Verfahren die Schritte des Herstellens einer porösen Epoxidharzmembran nach Anspruch 1 umfasst.

**7.** Verfahren zum Herstellen einer nichtwässrigen Elektrolytelektrizitätsspeichervorrichtung, wobei das Verfahren die Schritte umfasst:

Vorbereiten einer Kathode, einer Anode und eines Separators und
Zusammenbauen einer Elektrodengruppe aus der Kathode, der Anode und des Separators, wobei
der Separator eine Dicke aufweist, die im Bereich von 5 bis 50 $\mu$m liegt, und
der Schritt des Vorbereitens des Separators die Schritte des Herstellens einer porösen Epoxidharzmembran nach Anspruch 1 umfasst.

**8.** Poröse Epoxidharzmembran, umfassend:

eine dreidimensionale Netzwerkstruktur, die aus einem Epoxidharz besteht und eine Struktur umfasst, die durch

N-(CH$_2$)$_n$-N dargestellt wird, wobei n eine ganze Zahl von 4 bis 8 ist, und
Poren, die zwischen einer vorderen Oberfläche und einer hinteren Oberfläche der porösen Epoxidharzmembran miteinander kommunizieren.

**9.** Separator für nichtwässrige Elektrolytelektrizitätsspeichervorrichtungen, umfassend eine poröse Epoxidharzmembran nach Anspruch 8,
wobei der Separator eine Dicke aufweist, die im Bereich von 5 bis 50 $\mu$m liegt.

**10.** Nichtwässrige Elektrolytelektrizitätsspeichervorrichtung, umfassend:

eine Kathode,
eine Anode,
den Separator nach Anspruch 9, der zwischen der Kathode und der Anode angeordnet ist, und
einen Elektrolyten, der Ionenleitfähigkeit aufweist.

**11.** Semipermeable Verbundstoffmembran, umfassend:

eine poröse Epoxidharzmembran nach Anspruch 8 und
eine Hautschicht, die auf der Oberfläche der porösen Epoxidharzmembran ausgebildet ist.

**12.** Verfahren zum Herstellen einer semipermeablen Verbundstoffmembran, wobei das Verfahren umfasst:

die Schritte des Herstellens einer porösen Epoxidharzmembran nach Anspruch 1 und
Ausbilden einer Hautschicht auf einer Oberfläche der porösen Epoxidharzmembran.

## Revendications

**1.** Procédé de production d'une membrane de résine époxy poreuse, le procédé comprenant les étapes de :

préparation d'une composition de résine époxy contenant une résine époxy, un agent durcissant représenté par H$_2$N-(CH$_2$)$_n$-NH$_2$ où n est un nombre entier de 4 à 8, et un porogène ;
formation d'un produit durci de la composition de résine époxy en une forme de feuille ou durcissement d'un corps formé en forme de feuille de la composition de résine époxy, afin d'obtenir une feuille de résine époxy ; et
d'élimination du porogène de la feuille de résine époxy au moyen d'un solvant exempt d'halogène.

**2.** Procédé de production d'une membrane de résine époxy poreuse selon la revendication 1, dans lequel
le produit durci présente une forme creuse-cylindrique ou solide-cylindrique, et
l'étape de formation du produit durci en une forme de feuille comprend l'étape de découpe d'une partie de surface du produit durci avec une épaisseur prédéterminée de sorte que la feuille de résine époxy obtenue présente une forme de longue bande.

**3.** Procédé de production d'une membrane de résine époxy poreuse selon la revendication 2, dans lequel l'étape de découpe comprend la découpe de la partie de surface du produit durci tout en faisant tourner le produit durci autour d'un axe de cylindre creux ou un axe de cylindre solide du produit durci par rapport à une lame de découpe.

**4.** Procédé de production d'une membrane de résine époxy poreuse selon la revendication 1, dans lequel le porogène contient au moins un choisi parmi le polyéthylène glycol et le polypropylène glycol.

**5.** Procédé de production d'une membrane de résine époxy poreuse selon la revendication 1, dans lequel le solvant contient au moins un choisi dans le groupe constitué d'eau, de diméthylformamide, de diméthylsulfoxyde, et de tétrahydrofurane.

**6.** Procédé de production d'un séparateur pour des dispositifs de stockage d'électricité à électrolyte non aqueux qui présente une épaisseur comprise entre 5 et 50 $\mu$m, le procédé comprenant les étapes de production d'une membrane de résine époxy poreuse selon la revendication 1.

**7.** Procédé de production d'un dispositif de stockage d'électricité à électrolyte non aqueux, le procédé comprenant les étapes de :

préparation d'une cathode, d'une anode, et d'un séparateur ; et
d'assemblage d'un groupe d'électrode à partir de la cathode, de l'anode, et du séparateur, dans lequel
le séparateur présente une épaisseur de 5 à 50 $\mu$m, et
l'étape de préparation du séparateur comprend les étapes de production d'une membrane de résine époxy poreuse selon la revendication 1.

8. Membrane de résine époxy poreuse comprenant :

une structure de réseau tridimensionnel constituée d'une résine époxy et comprenant une structure représentée par N-$(CH_2)_n$-N où n est un nombre entier de 4 à 8 ; et
des pores communiquant les uns avec les autres entre une surface avant et une surface arrière de la membrane de résine époxy poreuse.

9. Séparateur pour dispositifs de stockage d'électricité à électrolyte non aqueux, comprenant une membrane de résine époxy poreuse selon la revendication 8,
le séparateur ayant une épaisseur de 5 à 50 $\mu$m.

10. Dispositif de stockage d'électricité à électrolyte non aqueux comprenant :

une cathode ;
une anode ;
le séparateur selon la revendication 9 disposé entre la cathode et l'anode ; et
un électrolyte ayant une conductivité d'ion.

11. Membrane semi-perméable composite comprenant :

une membrane de résine époxy poreuse selon la revendication 8 ; et
une couche de peau formée sur une surface de la membrane de résine époxy poreuse.

12. Procédé de production d'une membrane semi-perméable composite, le procédé comprenant :

les étapes de production d'une membrane de résine époxy poreuse selon la revendication 1 ; et
de formation d'une couche de peau sur une surface de la membrane de résine époxy poreuse.

FIG. 1

FIG. 2

## REFERENCES CITED IN THE DESCRIPTION

**Patent documents cited in the description**

- JP 2001192487 A
- JP 2000030683 A
- JP S58198324303 A
- JP H11989180208 A